# EUROPEAN PATENT APPLICATION

(11) **EP 4 517 280 A1**
(43) Date of publication of application: **05.03.2025**
(21) Application number: 24197663.8
(22) Date of filing: 30.08.2024
(51) Int. Cl.: G01H 9/00, F01D 21/00, G01M 11/08, G01M 15/14, G01H 1/00

(54) **SYSTEM AND METHOD FOR ACCURATELY POSITIONING OPTICAL TIP-TIMING PROBE**

(30) Priority: 01.09.2023 US 202363536304 P
(71) Applicant: RTX Corporation, Farmington, CT 06032 (US)
(72) Inventor: WARREN, Eli, Farmington, 06032 (US); HALDEMAN, Charles W., Farmington, 06032 (US)
(74) Representative: Dehns

(57) **Abstract**

A method for accurately positioning an optical tip-timing probe for identifying vibration in a rotor blade tip of a turbine engine, wherein the method includes identifying a target location to be measured on a rotor blade tip of a plurality of rotor blades disposed within a rotor casing of a turbine engine, marking the target location with a reflective material, associating a probe body having probe head cavity with the rotor casing, such that the probe head cavity is aligned with a rotor casing opening which exposes the plurality of rotor blades, disposing the probe head within the probe head cavity to be movably aligned with the rotor casing opening, centering the probe head within the probe head cavity to be located in a nominal starting position and operating the optical tip-timing probe to identify the target location and precisely align the probe head with the target location.

## Description

### BACKGROUND

This disclosure relates to a gas turbine engine, and more particularly to an optical tip-timing probe and a method for accurately positioning the optical tip-time probe that may be incorporated into a gas turbine engine.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades.

In turbine blade design, there is an emphasis on stress-resistant airfoil and platform designs, with reduced losses, increased lift and turning efficiency, and improved turbine performance and service life. To achieve these results, non-linear flow analyses and complex strain modeling are required, making practical results difficult to predict. Blade loading considerations also impose substantial design limitations, which cannot easily be generalized from one system to another.

During operation there are at least two types of stress happening to the compressor and turbine blades, an alternating, or vibration stress and a centrifugal static stress. As the blades rotate, they experience natural, resonance frequencies at different rpms. While vibrating, the blades are also under a centrifugal load as if they are being pulled from root to tip. If the blades are experiencing high loads of vibration, they may fail during use. Accordingly, it is important to conduct tests on the blades to try and validate the predicted operational life of the blades to prevent inflight failure. One way to do this, is to test the vibrational characteristics of the blades by conducting a dynamic spin test which tests the blades in a rotor blade assembly within a fully, assembled, turbine engine. The rotor assemblies are accelerated to actual engine speeds while the blades are subjected to vibratory and thermally induced stresses matching the stresses experienced in engine operation. The blades are then tested using an optical spot testing procedure which involves a probe that focuses onto a spot on the blade tip. As the blades spin, the probe measures the exact location of the spot at each rotational cycle. The amount of deviation in the position of the spot will provide the vibrational characteristics of the blade.

When optical spot probes are bolted on to the support case to perform optical spot testing, the tolerances in the probe assembly and the reoperations to the support case allows for roughly +/- 30 mils of axial mis-alignment of the spot on the blade tip. However, although the Non-Intrusive Stress Measurement System (NSMS) software can account for circumferential misplacement of the probe, the NSMS is not able to account for axial misplacement of the probe. Thus, if the target (i.e., spot) of the probe is off from the design, the reported deflection will be inaccurate for each mode shape and the amount of error that may be imparted to the NSMS measurement may be significant. In some cases, the spot may be so far off nominally that the spot may be off of the blade entirely.

### BRIEF DESCRIPTION

From one aspect, there is disclosed is an Optical Probe Testing System (OPTS) for identifying vibrations in a rotor blade of a turbine engine. The OPTS includes a probe body, wherein the probe body defines a probe head cavity having a probe head cavity bottom opening, and a probe fastener cavity. The OPTS further includes a probe fastener, wherein the probe fastener is disposed within the probe fastener cavity, and wherein the probe fastener is configured to securely associate the probe body to a rotor casing of a turbine engine, wherein the rotor casing contains a plurality of rotor blades and defines a rotor casing opening and a probe head including an optical probe sensor, wherein the probe head is disposed within the probe head cavity such that the optical probe sensor is aligned with the rotor casing opening.

In addition to one or more of the features described above, or as an alternative to any of the foregoing embodiments, further including an actuation device communicated with the probe head, wherein the probe head is movably disposed within the probe head cavity via the actuation device.

In addition to one or more of the features described above, or as an alternative to any of the foregoing embodiments, further including an alignment pin, wherein the alignment pin is disposed within the probe head cavity to align the probe head with the rotor casing.

In addition to one or more of the features described above, or as an alternative to any of the foregoing embodiments, wherein the probe head further includes an optical sensor, wherein, when the probe head is disposed within the probe head cavity, the optical sensor is visually communicated with the probe head bottom cavity opening.

In addition to one or more of the features described above, or as an alternative to any of the foregoing embodiments, wherein the rotor casing opening is communicated with the plurality of rotor blades, and wherein the optical sensor is visually communicated with the plurality of rotor blades to have a clear line-of-sight with the plurality of rotor blades.

In addition to one or more of the features described above, or as an alternative to any of the foregoing embodiments, wherein the probe head is communicated with an optical probe control device.

In addition to one or more of the features described above, or as an alternative to any of the foregoing embodiments, wherein the probe head includes probe head body and an optical sensor, and wherein the optical sensor is disposed to be adjacent to a bottom portion of the probe head body.

In addition to one or more of the features described above, or as an alternative to any of the foregoing embodiments, wherein the probe head body extends out of the probe body bottom.

In addition to one or more of the features described above, or as an alternative to any of the foregoing embodiments, wherein when the probe body is securely associated with the rotor casing, the probe head is disposed within the rotor casing opening such that the optical sensor has a direct line-of-sight field of view with the plurality of rotor blades.

There is also disclosed is a method for accurately positioning an optical tip-timing probe for identifying vibration in a rotor blade tip of a turbine engine, wherein the method includes identifying a target location to be measured on a rotor blade tip of a plurality of rotor blades disposed within a rotor casing of a turbine engine, marking the target location with a reflective material, associating a probe body having probe head cavity with the rotor casing, such that the probe head cavity is aligned with a rotor casing opening which exposes the plurality of rotor blades, disposing the probe head within the probe head cavity to be movably aligned with the rotor casing opening, centering the probe head within the probe head cavity to be located in a nominal starting position via an actuation device and operating the optical tip-timing probe to identify the target location and precisely align the probe head with the target location

In addition to one or more of the features described above, or as an alternative to any of the foregoing embodiments, wherein marking the target location includes coating the target location with a removable reflective surface treatment which is configured to burn off during engine operation.

In addition to one or more of the features described above, or as an alternative to any of the foregoing embodiments, wherein the optical tip-timing probe includes an optical sensor, and wherein associating a probe body includes associating the probe body such that the probe head is disposed within the rotor casing opening.

In addition to one or more of the features described above, or as an alternative to any of the foregoing embodiments, wherein centering the probe head includes centering the probe head within the probe head cavity using an alignment pin.

In addition to one or more of the features described above, or as an alternative to any of the foregoing embodiments, wherein operating includes operating the optical tip-timing probe to sense the plurality of rotor blades.

In addition to one or more of the features described above, or as an alternative to any of the foregoing embodiments, wherein operating includes operating the optical tip-timing probe to cause the generate an optical return signal.

In addition to one or more of the features described above, or as an alternative to any of the foregoing embodiments, wherein operating includes moving the probe head within the probe head cavity until the optical return signal returns an on-off transition.

In a further aspect which the Applicant expressly reserves the right to claim independently, there is disclosed is a method of tracking the axial position of a target location on a tip of a rotor blade of a turbine engine during operation of the turbine engine using an optical probe. The method includes selecting a rotor blade from the plurality of rotor blades of the turbine engine, wherein the rotor blade includes a rotor blade tip, having a surface of the rotor blade tip configured to change how the shape of the rotor blade tip is sensed by an optical sensor, treating the surface of the rotor blade tip with a surface finish and operating the optical probe to determine if the location of the tip of the rotor blade has shifted.

In addition to one or more of the features described above, or as an alternative to any of the foregoing embodiments, the surface of the rotor blade tip includes a surface shape that changes how the width of the rotor blade tip is sensed by the optical sensor.

In addition to one or more of the features described above, or as an alternative to any of the foregoing embodiments, wherein treating a surface includes treating the surface to affect a reflectivity of the surface.

In addition to one or more of the features described above, or as an alternative to any of the foregoing embodiments, wherein operating includes operating the optical probe to generate an optical return signal and identifying a change in a pulse width of the optical return signal.

### BRIEF DESCRIPTION OF THE DRAWINGS

The following descriptions should not be considered limiting in any way. With reference to the accompanying drawings, like elements are numbered alike:
FIG. 1 is a schematic, partial cross-sectional view of a gas turbine engine in accordance with this disclosure;
FIG. 2 is a sectional view of the optical probe testing system associated with a rotor casing of a turbine engine, in accordance with an embodiment of the invention;
FIG. 3A is an plan view of an optical probe body, in accordance with an embodiment of the invention;
FIG. 3B is a side view of an optical probe body, in accordance with an embodiment of the invention;
FIG. 4 is a sectional view of the optical probe testing system associated with a rotor casing of a turbine engine, in accordance with an embodiment of the invention;
FIG. 5 is a section view of the optical probe testing system, in accordance with an embodiment of the invention;
FIG. 6 is a plan view of tip of a rotor blade for a turbine engine, in accordance with an embodiment of the invention;
FIG. 7 is an operational block diagram illustrating a method for accurately positioning an optical tip-timing probe, in accordance with an embodiment of the invention;
FIG. 8 is an operational block diagram illustrating a method for tracking the axial position of a target location on a tip of a rotor blade of a turbine engine, in accordance with an embodiment of the invention;
FIG. 9 is a plan view of tip of a modified tip of a rotor blade for a turbine engine, in accordance with an embodiment of the invention; and
FIG. 10 is a graph illustrating an optical return signal generated by the optical probe testing system in response to vibration of a modified tip of a rotor blade for a turbine engine during operation, in accordance with an embodiment of the invention.

### DETAILED DESCRIPTION

A detailed description of one or more embodiments of the disclosed apparatus and method are presented herein by way of illustration and not limitation with reference to the Figures.

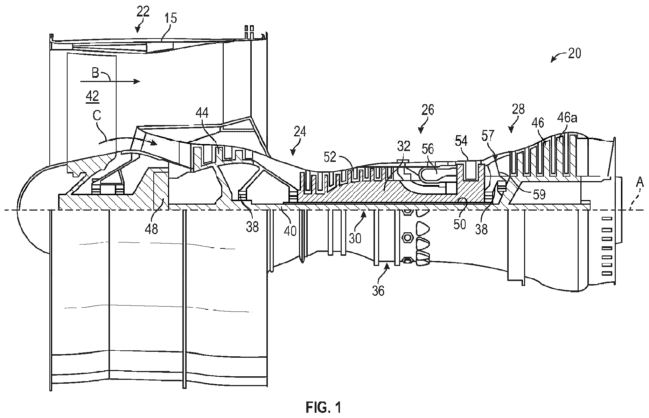

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first or low pressure compressor 44 and a first or low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second or high pressure compressor 52 and a second or high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In one non-limiting embodiment, the geared architecture 48 is an epicyclic gear train, such as a planetary gear system or other gear system, with a gear reduction ratio. In one non-limiting embodiment, the fan diameter is significantly larger than that of the low pressure compressor 44. The geared architecture 48 may be an epicycle gear train, such as a planetary gear system or other gear system. It should be understood, however, that the above parameters are only exemplary of one embodiment of a geared architecture engine and that the present disclosure is applicable to other gas turbine engines including direct drive turbofans. A significant amount of thrust is provided by the bypass flow B due to the high bypass ratio.

As discussed briefly hereinabove, optical spot testing has limitations when the tolerances in the probe assembly and the reoperations to the support cases exceed roughly +/- 30 mils of axial mis-alignment of the spot on the blade tip. This is because the NSMS software is not able to account for that level of axial misplacement of the probe. If the target (i.e., spot) of the probe is off from the design tolerances, the reported deflection will be inaccurate for each mode shape and the amount of error that may be imparted to the NSMS measurement may be significant. This makes optical spot testing difficult because in some cases, the spot may be so far out of tolerance that the spot may actually be located off of the blade tip entirely.

In an embodiment, the invention solves this problem by providing a method for allowing for some adjustment of the optical probe by opening the reop-to-probe interface, where the blade tips will be treated with a binary change in reflectivity at the precise desired axial target location. This may be achieved using a marking method, such as stamp ink, or the like, that will not harm the blade tip. As the probe assembly is being installed, the probe will be illuminated and adjusted until the optical return results in the expected on-off transition which indicates that the probe is focused onto the proper axial location on the blade tip. In another embodiment, if appropriate access is available, the axial location of the spot can be verified visually. Moreover, the design of the invention may also incorporate a default feature that restores the reop-to-probe interface to its original nominal position. The binary reflective surface treatment is also designed to burn-off during normal engine operation, so that it does not affect the normal data acquisition. Furthermore, in an embodiment, during installation of the probe, the probe may be adjustable to achieve the exact desired axial location without requiring physical access to the inside of the engine. This will improve the accuracy of the optical spot measurement and eliminate discrepancies due to axial variation of probe's target.

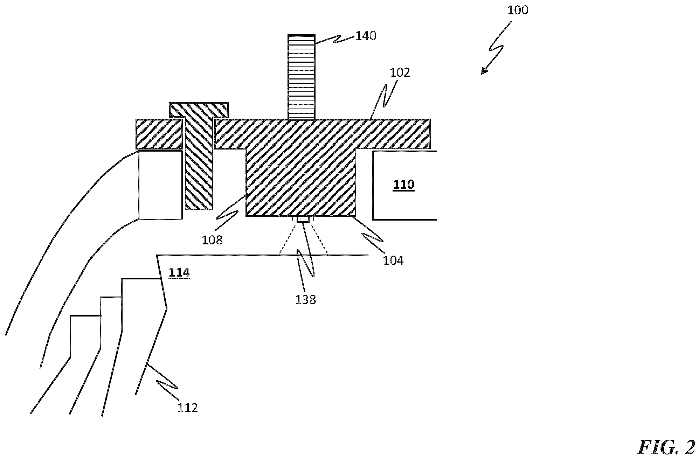

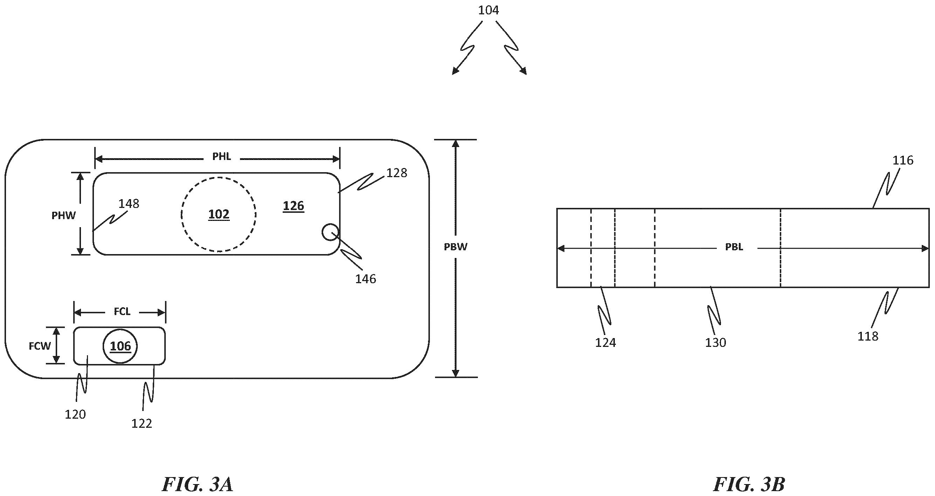

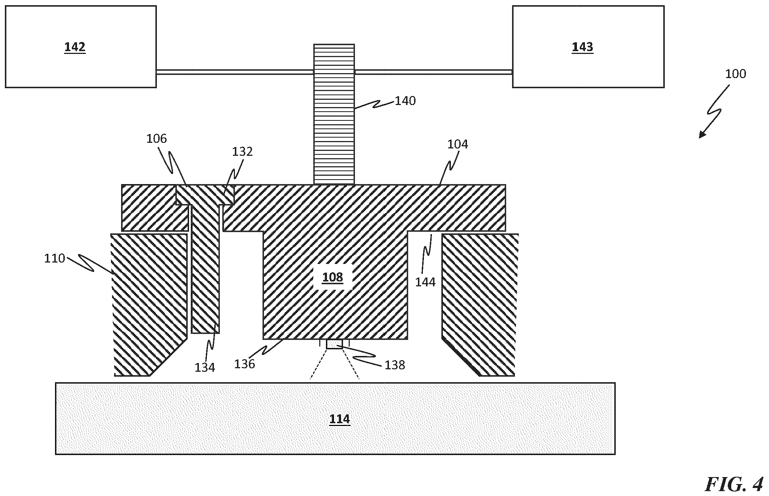

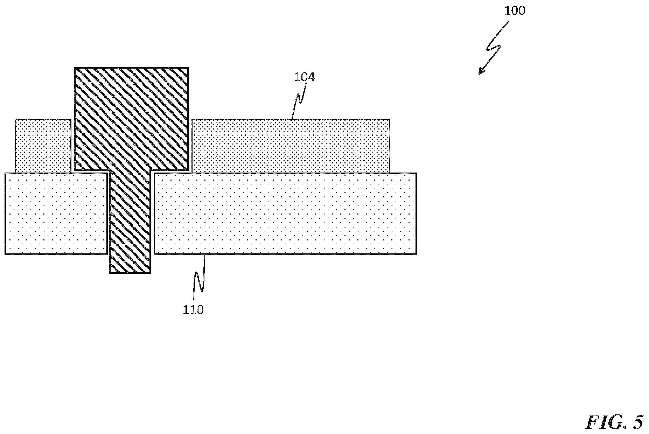

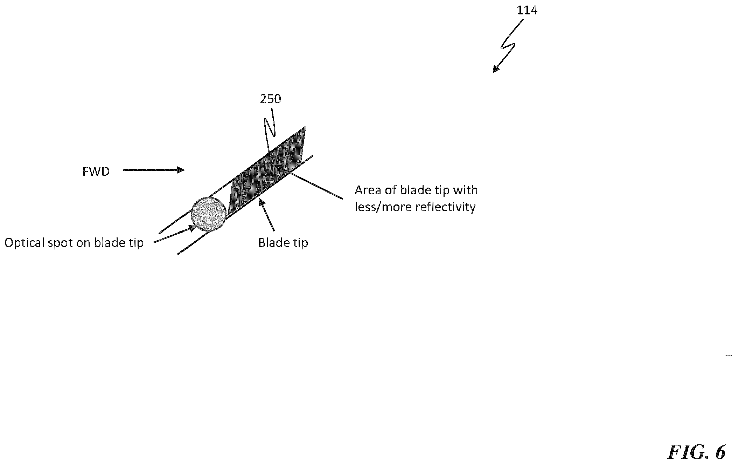

Referring to **FIGS. 2-6****,** an optical probe testing system 100 is shown in accordance with an embodiment, wherein the optical probe testing system 100 includes an optical tip-timing probe 102 having a probe body 104, a probe fastener 106 and a probe head 108. Probe body 104 is configured to mount to a rotor casing 110 that is disposed concentrically to cover at least a portion of a rotor blade assembly 112 which includes a plurality of rotor blades 114. Probe body 104 may be mounted to the rotor casing 110 such that the probe head 106 is aligned with the rotor blade assembly 112 to have a clear line-of-sight of the plurality of rotor blades 114. Probe body 104 includes a probe body top 116, a probe body bottom 118, a probe body length **PBL** and a probe body width **PBW.** Probe body 104 defines a fastener cavity 120, a fastener cavity top opening 122 and a fastener cavity bottom opening 124, wherein the fastener cavity 120 communicates the fastener cavity top opening 122 with the fastener cavity bottom opening 124. Moreover, the probe fastener cavity 120 includes a fastener cavity length **FCL** and a fastener cavity width **FCW.** Probe body 104 also defines a probe head cavity 126, a probe head cavity top opening 128 and a probe head cavity bottom opening 130, wherein the probe head cavity 126 communicates the probe head cavity top opening 128 with the probe head cavity bottom opening 130. Moreover, the probe head cavity 126 includes a probe head cavity length **PHL** and a probe head cavity width **PHW .**

The probe fastener 106 includes a fastener head 132 and a fastener interface portion 134, wherein the probe fastener 106 and the fastener cavity 120 are configured such that the fastener head 132 is contained within the fastener cavity 120 and the fastener interface portion 134 extends out of the fastener cavity bottom opening 124. The probe head 108 includes a probe head body 136 having an optical probe sensor 138, and an optical probe lead 140 which communicates the optical probe sensor 138 with an optical probe control device 142. It should be appreciated that the optical probe control device 142 may include a processor for controlling the operation of the optical probe testing system 100 and/or the optical probe sensor 138. The probe head 108 is configured to be contained within the probe head cavity 126 such that the optical probe lead 140 is connected to the probe head body 136 via the probe head body top opening 128 and such that the optical probe sensor 138 is facing out of the probe head body bottom opening 130. It should be appreciated that the rotor casing 110 defines a rotor casing opening 144 which is configured to allow access to the plurality of rotor blades 114. It should be appreciated that, in an embodiment, an actuation device (e.g., a linear stepper motor/mic or other type of motor) 143 may be included and may be in signal communication with the optical probe control device 142 to allow the position of at least one of the optical sensor 138 and/or probe head 108 to be controllably adjustable.

The optical tip-timing probe 102 is securely associated with the rotor casing 110 by mounting the probe body 104 to the rotor casing 110 using the probe fastener 106 such that the probe head cavity 126 is directly in line and communicated with the rotor casing opening 144. The optical tip-timing probe 102 is associated with the probe body 104 by securely disposing the probe head body 136 within the probe head cavity 126 such that the optical probe lead 140 is extending out of the probe head cavity top opening 128 and such that the optical probe sensor 138 is facing and/or extending out of the probe head cavity bottom opening 130 to have a direct line of sight with the plurality of rotor blades 114. It should be appreciated that the optical tip-timing probe 102 may further include an alignment pin 146 which may be disposed within the probe head cavity 126 via the probe head cavity top opening 128 to engage with both a probe head cavity inner wall 148 and the probe head body 136 to align the probe head 108 within the probe head cavity 126. This allows the optical tip-timing probe 102 to be precisely aligned within the probe head cavity 126 such that the optical probe sensor 138 can optically inspect a precise area on one or more blades of the plurality of rotor blades 114 as the plurality of rotor blades 114 are rotating within the rotor casing 110.

As discussed briefly above, when an optical spot probe is bolted onto a rotor case 114, the tolerances in the optical tip-timing probe 102 and the reoperations to the rotor case 110 allows for roughly about +/- 30 mils (0.76 mm) of axial misalignment of the inspection spot which is located on the tips of one or more blades of the plurality of rotating rotor blades 114. Although the Non-Intrusive Stress Measurement System (NSMS) software can account for a circumferential misplacement of the inspection spot, the NSMS is unable to accurately account for axial placement of the inspection spot. Thus, if the target inspection spot that the optical tip-timing probe 102 is designed to sense is off from the design, the reported deflection of the rotor blade will be inaccurate for each mode shape.

In an embodiment, the blade tips may be treated to cause a binary change in reflectivity at a precisely desired axial target location, wherein the change in reflectivity can be achieved using a stamp ink, or the like, that will not harm the blade. Thus, during installation of the optical tip-timing probe 102, the optical probe sensor 138 will be illuminated to sense a blade tip on one of the plurality of rotor blades 114 to obtain an optical return signal. The optical probe sensor 138 will be adjusted until the optical return signal returns an on-off transition, which indicates the proper axial location on the blade tip of the rotor blade 114. If the design of the rotor casing 110 allows for access to the plurality of rotor blades 114, then the axial location of the target spot can be verified visually. Additionally, according to an embodiment, the method incorporates a default feature that restores the reop-to-probe interface to its original nominal position. It should be appreciated that the binary reflective surface treatment may be permanent or may be designed to burn-off during normal engine operation, so that it does not affect the normal data acquisition. It should also be appreciated that the optical tip-timing probe 102 may be adjusted to achieve the exact desired axial location without having physical access to the inside of the gas turbine engine 20.

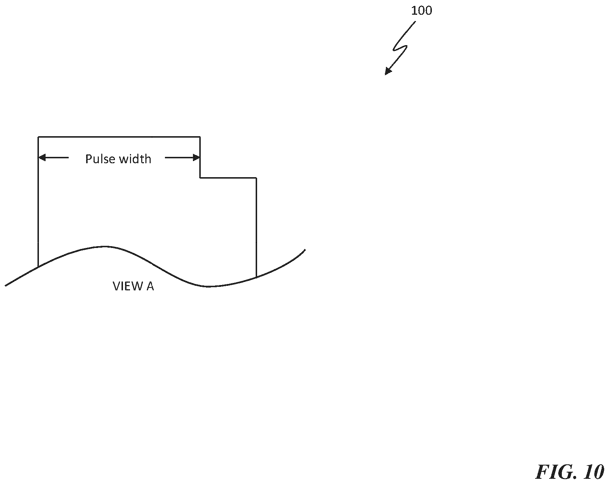

In another embodiment, the blade tip of a rotor blade in the plurality of rotor blades 114 may be shaped at an angle and marked on the radially-inboard surface with a marking (e.g. Rokide, or the like). Accordingly, this marking may be temporary or permanent and may be used to make the necessary adjustments of the probe head 108 at installation, as well as allow the probe head 108 to be adjusted during an operational test. The actuation can be achieved via the actuation device 143. If the probe head 108 becomes misaligned, the tapered marking on the blade tip of the rotor blade 114 will cause a change in the pulse width of the optical return signal. Referring to FIG. 10, based on the change in the pulse width, the actuation device 143 can be used to adjust the probe head 108 to correct for any shifts during testing by returning the probe head 108 to a position with the correct-as designed/calibrated-pulse width. This will ensure a proper reporting of deflection derived from the time-of-arrival data of the optical return signal.

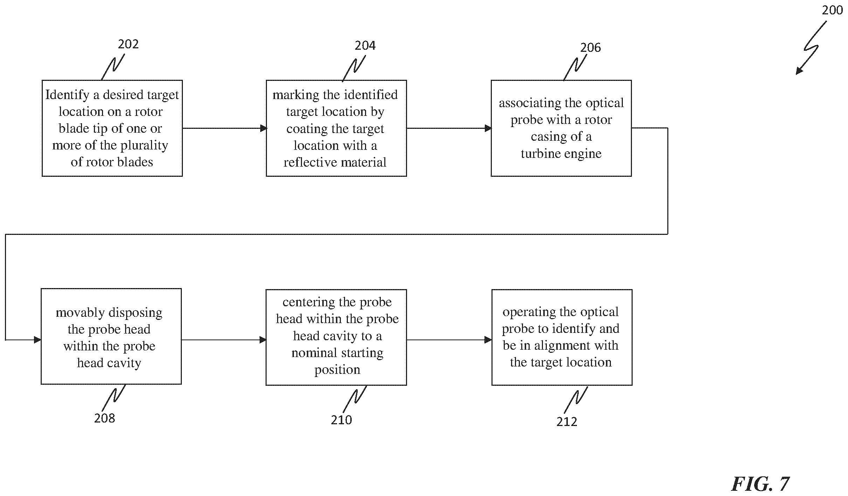

Referring to **FIG. 7****,** a method 200 for accurately positioning an optical tip-timing probe is provided, in accordance with an embodiment. The method 200 includes identifying a desired target location 250 on a rotor blade tip of one or more of the plurality of rotor blades 114 of a turbine engine, as shown in **operational block 202.** The method 200 further includes marking the identified target location 250 by coating the target location 250 with a reflective material, as shown in **operational block 204.** This may be accomplished by marking the target location 250 using a reflective material, such as a stamp ink, or some other reflective surface treatment, that will not harm the rotor blade 114 and that may burn off under normal engine operating conditions. The method 200 includes associating the optical tip-timing probe 102 with a rotor casing 11 0 of a turbine engine, as shown in **operational block 206.** As discussed hereinabove, this may be accomplished by mounting the probe body 104 to the rotor casing 110 such that the probe head cavity 126 is directly in line and communicated with the rotor casing opening 144.

The method 200 includes movably disposing the probe head 108 within the probe head cavity 126, as shown in **operational block 208.** This may be accomplished by movably disposing the probe head 108 within the probe head cavity 126 such that the optical probe sensor 138 is facing out of the probe head cavity bottom opening 130 to have a direct line of sight with the plurality of rotor blades 114. The method further includes centering the probe head 108 within the probe head cavity 126 to a nominal starting position, as shown in **operational block 210.** This may be accomplished by adjusting the alignment pin 146 which is disposed within the probe head cavity 126 to cause the probe head 108 to be disposed as desired within the probe head cavity 126. The method 200 includes operating the optical tip-timing probe 102 to identify and be brought into alignment with the target location 250, as shown in **operational block 212.** This may be accomplished by operating the optical tip-timing probe 102 to cause the optical probe sensor 138 to begin sensing the surface of the blade tip of the rotor blade 114 to receive an optical return signal. The probe head 108 is moved within the probe head cavity 126 until the optical return signal returns an on-off signal transition. This indicates that the optical probe sensor 138 is properly aligned with the precise axial location 250 on the tip of the rotor blade 114.

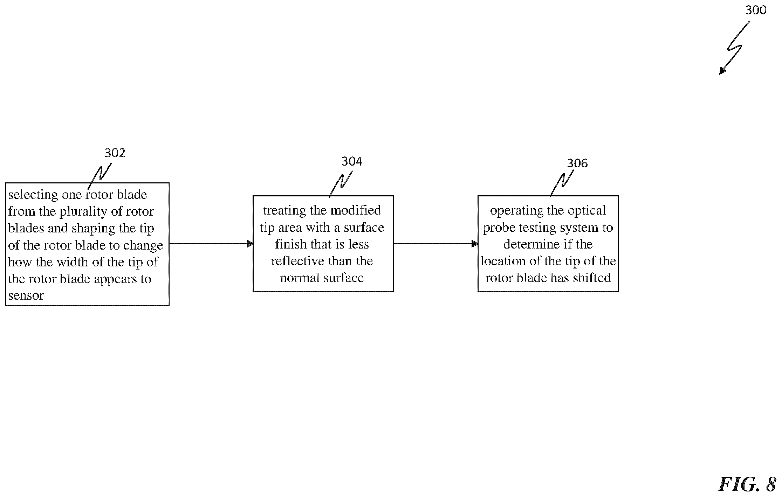

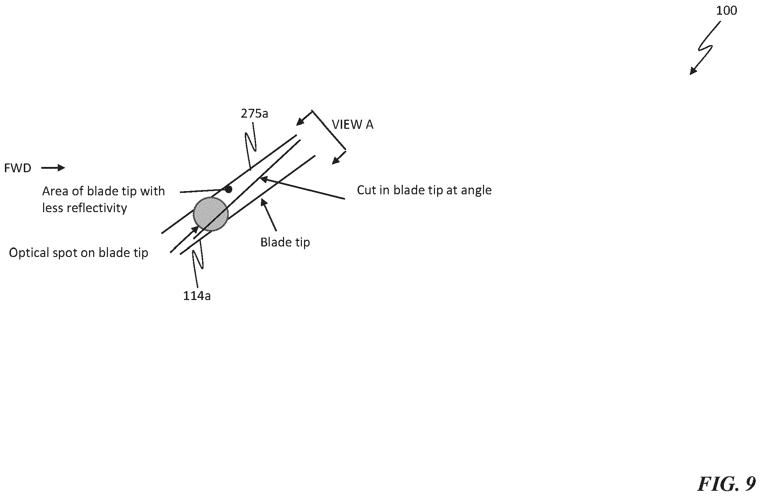

Referring to **FIG. 8****,** **FIG. 9** and **FIG. 10****,** a method 300 for tracking the axial position of a target location 250 on a tip of a rotor blade 114 of a turbine engine during operation is provided, in accordance with an embodiment. The method 300 includes selecting one rotor blade 114a from the plurality of rotor blades 114, wherein the tip of the rotor blade 114a may be shaped to change how the width of the tip of the rotor blade 114 (modified tip area 275a) is 'seen' or sensed by the optical sensor 138, as shown in **operational block 302.** It should be appreciated that tip of the rotor blade 114a may be shaped to have any shape desired that changes how the width of the tip of the rotor blade 114a is 'seen' or sensed by the optical sensor 138. The method 300 also includes treating the modified tip area 275a with a surface finish that is less reflective than the normal surface, as shown in **operational block 304.** The method 300 further includes operating the optical probe testing system 100 to determine if the location of the tip of the rotor blade 114a has shifted, as shown in **operational block 306.** This may be accomplished by sensing the location of the tip of the rotor blade 114a and monitoring the optical return signal to identify any change in the pulse width of the optical return signal (time-domain) (see FIG. 10).

It should be appreciated that, although the invention is described hereinabove with regards to the inspection of a turbine rotor blade, it is contemplated that in other embodiments the invention may be used for any type of rotating object, such a fan rotor blade, a compressor rotor blade, etc.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An Optical Probe Testing System (OPTS) (100) for identifying vibrations in a rotor blade (114) of a turbine engine (20), the OPTS (100) comprising:
a probe body (104), wherein the probe body (104) defines a probe head cavity (126) having a probe head cavity bottom opening (130), and a probe fastener cavity (120);
a probe fastener (106), wherein the probe fastener (106) is disposed within the probe fastener cavity (120), and wherein the probe fastener (106) is configured to securely associate the probe body (104) to a rotor casing (110) of a turbine engine (20), wherein the rotor casing (110) contains a plurality of rotor blades (114) and defines a rotor casing opening (144); and
a probe head (108) including an optical probe sensor (138), wherein the probe head (108) is disposed within the probe head cavity (126) such that the optical probe sensor (138) is aligned with the rotor casing opening (144).

2. The OPTS of claim 1, further including an actuation device (143) communicated with the probe head (108), wherein the probe head (108) is movably disposed within the probe head cavity (126) via the actuation device (143).

3. The OPTS of claim 1 or 2, further comprising an alignment pin (146), wherein the alignment pin (146) is disposed within the probe head cavity (126) to align the probe head (108) with the rotor casing (110).

4. The OPTS of any preceding claim, wherein the probe head (108) further includes an optical sensor (138), wherein when the probe head (108) is disposed within the probe head cavity (126), the optical sensor (138) is visually communicated with the probe head cavity bottom opening (130).

5. The OPTS of claim 4, wherein the rotor casing opening (144) is communicated with the plurality of rotor blades (114), and wherein the optical sensor (138) is visually communicated with the plurality of rotor blades (114) to have a clear line-of-sight with the plurality of rotor blades (114).

6. The OPTS of any preceding claim, wherein the probe head (108) is communicated with an optical probe control device (142).

7. The OPTS of any preceding claim, wherein the probe head (108) includes a probe head body (136) and an or the optical sensor (138), and wherein the optical sensor (138) is disposed to be adjacent to a bottom portion of the probe head body (136), optionally wherein the probe head body (136) extends out of the probe body bottom (118).

8. The OPTS of claim 7, wherein when the probe body (104) is securely associated with the rotor casing (110), the probe head (108) is disposed within the rotor casing opening (144) such that the optical sensor (138) has a direct line-of-sight field of view with the plurality of rotor blades (114).

9. A method for accurately positioning an optical tip-timing probe (102) for identifying vibration in a rotor blade tip of a turbine engine (20), the method comprising:
identifying a target location (250) to be measured on a rotor blade tip of a plurality of rotor blades (114) disposed within a rotor casing (110) of a turbine engine (20);
marking the target location (250) with a reflective material;
associating a probe body (104) having probe head cavity (126) with the rotor casing (110), such that the probe head cavity (126) is aligned with a rotor casing opening (144) which exposes the plurality of rotor blades (114);
disposing a probe head (108) within the probe head cavity (126) to be movably aligned with the rotor casing opening (144);
centering the probe head (108) within the probe head cavity (126) to be located in a nominal starting position via an actuation device (143); and
operating the optical tip-timing probe (102) to identify the target location (250) and precisely align the probe head (108) with the target location (250) and to generate an optical return signal having a predetermined pulse width.

10. The method of claim 9, wherein marking the target location (250) includes coating the target location (250) with a reflective surface treatment.

11. The method of claim 9 or 10, wherein the optical tip-timing probe (102) includes an optical sensor (138), and wherein associating a probe body (104) includes associating the probe body (104) such that the probe head (108) is disposed within the rotor casing opening (144).

12. The method of any of claims 9 to 11, wherein centering the probe head (108) includes centering the probe head (108) within the probe head cavity (126) using an alignment pin (146).

13. The method of any of claims 9 to 12, wherein operating includes operating the optical tip-timing probe (102) to sense the plurality of rotor blades (114) and to return the optical return signal.

14. The method of claim 13, wherein operating includes operating the optical tip-timing probe (102) to generate an optical return signal, and adjusting the probe head (108) within the probe head cavity (126) until a pulse width of the optical return signal returns an on-off transition.

15. The method of claim 13 or 14, wherein operating includes operating the optical tip-timing probe (102) to generate an optical return signal, wherein if a change in the pulse width of the optical return signal is detected, a position of the probe head (108) is adjusted until the pulse width of the optical return signal is equal to the predetermined pulse width.
